# EUROPEAN PATENT APPLICATION

(11) **EP 2 096 783 A2**
(43) Date of publication of application: **02.09.2009**
(21) Application number: 08171767.0
(22) Date of filing: 16.12.2008
(51) Int. Cl.: H04L 1/18, H04L 1/20

(54) **Collision detection for a radio communication system**

(30) Priority: 28.02.2008 JP 2008047179
(71) Applicant: Fujitsu Limited, Kawasaki-shi, Kanagawa 211-8588 (JP)
(72) Inventor: Yokoyama, Hitoshi, Kawasaki-shi, Kanagawa 211-8588 (JP)
(74) Representative: Stebbing, Timothy Charles

(57) **Abstract**

A radio communication system in which radio communication is carried out between a terminal and a base station through any of the predetermined number of random access slots. The radio communication system includes a base station which subjects a received access signal to CRC error judgment (151) and signal-to-noise ratio judgment (152). When the CRC error judgment yields a code error, and when the signal-to-noise ratio is greater than a prescribed reference value (THsn), the radio communication system judges (154) that there is collision of random access between a plurality of terminals. The communication system avoids a state in which communication cannot be established, and which arises when collision detection and a transmission reset function are not added to RACH in LTE.

## Description

The present invention is directed to a radio communication system and to a base station for use in such a system.

In a conventional RACH (Random Access Channel) used in W-CDMA (Wideband-Code Division Multiple Access), access is enabled by including UE (user terminal) information and/or control information in a message section, during initial transmission. Collision detection can thus be carried out employing user-specific information.

Specifically, random access, which is used when executing initial access in cellular systems and radio LAN (Local Area Network) systems, provides a communication service using a stable radio channel when connection is enabled.

During initial connection, however, there exists the possibility of falling into connection control retry due to line collision arising when it is unclear whether another user terminal is using the line. Accordingly, enabling connection with good efficiency by reducing in some manner such collisions has been the object of ongoing study.

In particular, the RACH in LTE (Long Term Evolution) schemes (TS36.300, Version 820, Random Access Procedure, Section 10.1.5) proposed for next-generation cellular systems does not carry specific information during initial transmission, and hence, it is difficult to carry out collision detection using conventional user-specific information.

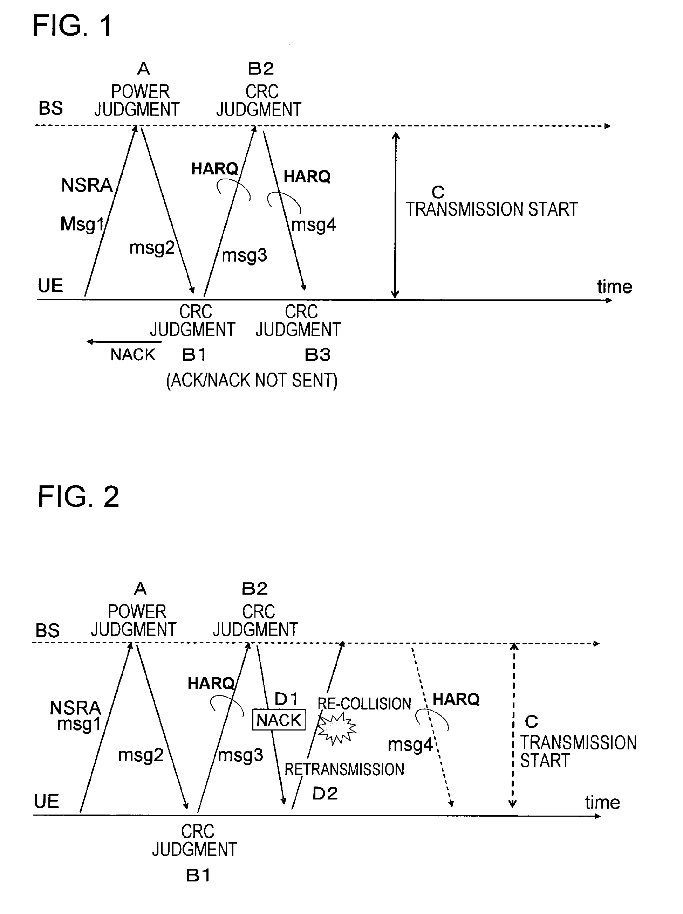

Fig. 1 is a diagram for explaining the LTE (Long Term Evolution) random access procedure of the cellular system expounded in TS36.300, Version 820, Random Access Procedure, Section 10.1.5.

A user terminal UE (User Equipment) sends a communication-request initial message msg1, by way of a non-synchronous random access (NSRA) signal, to a base station (BS), via an access slot of arbitrary sequence among 64 random sequences, to carry out thereby collision-tolerant initial access.

The communication-requesting user terminal UE is allocated a random access slot number from the selected random sequence, and the message msg1 is sent by NSRA. Specifically, there is used "Slotted Aloha" synchronized only to random signals.

With a timing received by NSRA, the base station BS judges power by monitoring constantly the access slots of all the 64 random sequences, to acknowledge thereby NSRA detection / non-detection (Fig. 1, A).

When the base station BS detects a NSRA signal, by detecting power equal to or greater than a predefined discrimination value, the base station BS judges that all the user terminals UE are sending communication requests. The base station BS allocates a temporary ID number (ID) in the base station BS to the detected access slot number (random sequence number), and sends back a response message msg2. Within the message msg2 there is additionally notified, with a predetermined format, a TA (Timing Advance), which is a transmission timing control of the user terminal UE, and a "grant", which is a next-transmission frequency band.

The user terminal UE performs a Circular (Cyclic) Redundancy Check (CRC) on the message msg2 sent by the base station BS. If the user terminal UE can decode the message msg2 without error (Fig. 1 B1), the user terminal UE reflects a TA (Timing Advance), which is a transmission timing control, by allocating the temporary ID in the base station BS, added to the message msg2, and the ID of the user terminal UE, through HARQ (Hybrid ARQ) that combines an ARQ (Auto Repeat reQuest) with error correction encoding.

The user terminal UE sends a response message msg3 using the requested "grant".

If the base station BS can decode the message msg3 from the user terminal UE (Fig. 1, B2), the base station BS acknowledges that a communication environment has been established between the terminal and the base station. The base station BS starts communication establishment preparation of a Core Network (CN) and radio control information that are necessary for initiating data communication, and notifies by HARQ, the radio control information, as a message msg4, to the user terminal UE. If the user terminal UE can decode the message msg4 (Fig. 1, B3) communication can start thenceforth.

Data communication starts thus by using the above series of random access procedures (Fig. 1, C).

In RACH using an LTE scheme, however, problems occur when transmission reset function and collision detection are not added. Fig. 2 is a diagram for explaining a procedure in the absence of such additional transmission reset function and collision detection.

As illustrated in Fig. 2, when the HARQ response message msg3 from the user terminal UE does not arrive at the base station BS, the user terminal UE fails to decode the response message msg4 from the base station BS within a predefined lapse of time. In this case, the user terminal UE judges that NSRA transmission has failed, and returns to NSRA transmission resend (initial message msg1).

There arises thus the concern that the user terminal UE may go on repeatedly retransmitting, by HARQ, while there is no prospect of improvement.

A situation can be envisaged herein in which, for instance, two user terminals UE collide by using an access slot having the same random sequence. In power judgment for the initial NSRA (message msg1), in the base station BS, it suffices to detect energy (power), and hence the base station BS just returns the message msg2 without judging the NSRA transmission from plural user terminals, and hence there occur no processing glitches.

That is, the response message msg2 from the base station BS includes no specific information on the user terminal UE, and therefore, the base station BS acknowledges is NSRA transmission from one user terminal UE, even in case of NSRA collision, and sends the message msg2. The user terminal UE judges the NSRA success or failure of the response message msg2, sent by the base station BS, on the basis of the random access slot number used in NSRA.

Accordingly, different user terminals send simultaneously, via a message msg3 as a response to the message msg2, the ID of the user terminal UE and the ID allocated by the base station BS and which is carried in the message msg2.

The messages msg3 sent by the different user terminals UE, therefore, collide with each other, which gives rise to the following problems when the base station BS detects the message msg3.

A no-good NG result is obtained upon detecting the message msg3 and performing CRC (Cyclic Redundancy Check) thereon, and hence a NACK signal is sent by the base station BS (Fig. 2, D1), to carry out HARQ retransmission request.

The retransmission request in such a base station BS is based on the idea that "although the NG result of message msg3 detection was due to accidental signal quality impairment during the call, sufficient quality can be expected to be achieved after HARQ retransmission", without judging collision occurrence.

However, when signals collide between user terminals UE, collision occurs again even if retransmission is carried out following the retransmission request from the base station BS (Fig. 2, D2). Thus, no characteristic improvement can be expected by repeating such retransmission, which ends up wasting frequency resources.

It is desirable, therefore, to provide a radio communication system which may avoid a state in which communication cannot be established, and which arises when collision detection and a transmission reset function are not added to RACH in LTE.

According to a first aspect of the present invention, there is provided a radio communication system which carries out radio communication between a user terminal and a base station through any of the predetermined number of random access slots, and in which the base station subjects a received access signal to CRC error judgment and to signal-to-noise ratio judgment. When the CRC error judgment yields a code error, and when the signal-to-noise ratio is greater than a prescribed reference value, the base station judges that there is collision of random access between a plurality of terminals.

Alternatively, the base station subjects a received access signal to CRC error judgment and generation of a power profile of the received access signal. When the CRC error judgment yields a code error, and when a delay spread of the power profile is wider than a reference value, the base station judges that there is collision of random access between a plurality of terminals.

This allows avoiding repeated HARQ signal retransmission, and allows substantially shortening the time until the initial message msg1 returns again to NSRA.

Additional advantages of the embodiment will be set forth in part in the description which follows, and in part will be obvious from the description, or may be learned by practice of the invention. The and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

Reference is made, by way of example only, to the accompanying drawings in which:
Fig. 1 is a diagram for explaining the LTE (Long Term Evolution) random access procedure of the cellular system expounded in TS36.300, Version 820, Random Access Procedure, Section 10.1.5;
Fig. 2 is a diagram for explaining a procedure in the absence of additional transmission reset function and collision detection.
Fig. 3 is a schematic block diagram of an embodiment of a user terminal;
Fig. 4 is a schematic block diagram of an embodiment of a base station BS corresponding to the user terminal shown in the schematic block diagram of Fig. 3.
Fig. 5A represents the signal sequence between the user terminal UE and the base station BS;
Fig. 5B represents collision judgment conditions;
Fig. 5C is an example of a power profile generated in accordance with the second collision judgment method.
Fig. 6A is a diagram for explaining a regular format of message msg2;
Fig. 6B is a diagram for explaining an irregular format.
Fig. 7 is a configuration example of a collision judging unit corresponding to the first collision judgment method.
Fig. 8 is a configuration example of the collision judging unit corresponding to a second collision judgment method.
Fig. 9 is a configuration example of a collision judging unit corresponding to a third collision judgment method.
Fig. 10 is a process flow diagram for explaining a first method of collision notification to a user terminal UE, as a working example of a method for notifying collision to a user terminal UE.
Fig. 11 is a process flow diagram for explaining a second notification method for notifying collision to a user terminal UE.
Fig. 12 is a configuration example block diagram of the collision notification generating unit 16 of the base station BS, in the case of the second notification method.
Fig. 13 is a process flow diagram for explaining a third notification method for notifying collision to a user terminal UE.
Fig. 14 is a configuration example block diagram of the collision notification generating unit 16 of the base station BS, in the case of the third notification method.
Fig. 15 is a block diagram of a first configuration example of a RACH Res checking unit 7;
Fig. 16 illustrates a configuration example of the RACH Res checking unit corresponding to the second collision notification method illustrated in Fig. 11;
Fig. 17 illustrates a configuration example of the RACH Res checking unit 7 corresponding to the third collision notification method illustrated in Fig. 13.

Embodiments of the present invention are explained next with reference to accompanying drawings.

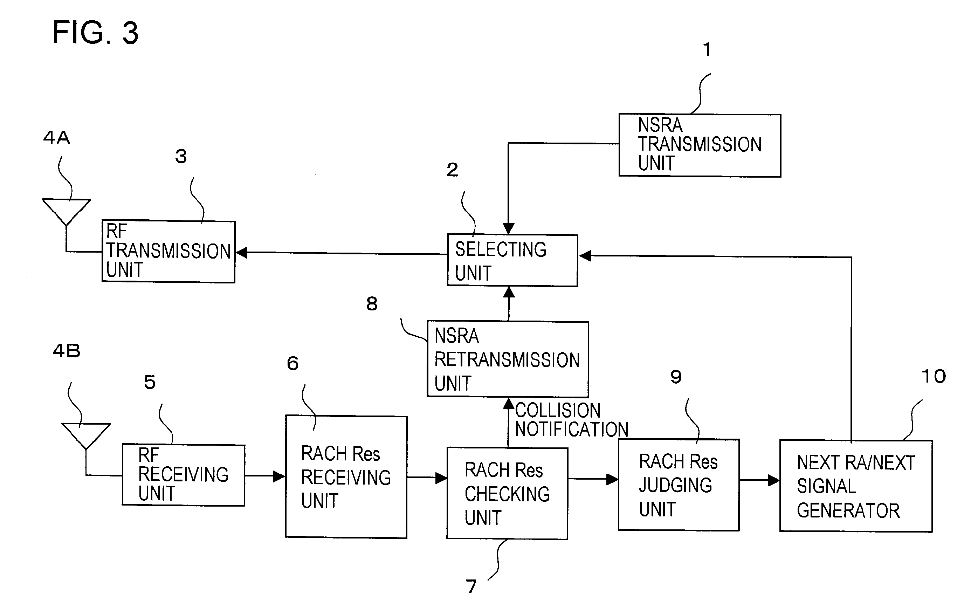

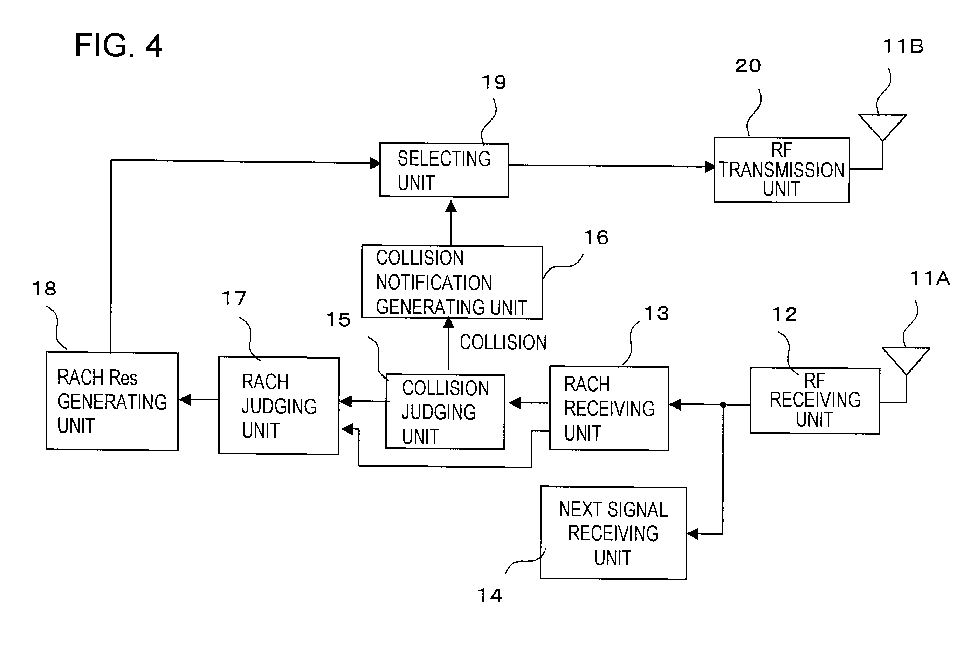

Fig. 3 is a schematic block diagram of an embodiment of a user terminal. Fig. 4 is a schematic block diagram of an embodiment of a base station BS corresponding to the user terminal.

The embodiments include collision detection and collision notification processing in the base station BS, and retransmission processing from the user terminal UE.

The configurations of the user terminal and of the base station BS are explained linked to each other.

During transmission request in the user terminal UE illustrated in Fig. 3, an initial access signal msg1 is generated by a NSRA (Non-Synchronized Random Access) transmission unit 1. The generated initial access signal msg1 is sent to a radio frequency (RF) transmission unit 3 via a selecting unit 2. In the RF transmission unit 3, the initial access signal msg1 is upconverted to a radio frequency and is emitted from an antenna 4A.

The initial access signal msg1 is transmitted by NSRA by selecting an access slot of arbitrary sequence from among 64 random sequences.

RACH sequences other than initial access are outputted, as Next RA (Random Access), by a Next RA/Next Signal generating unit 10, and are emitted from an antenna 4 via the selecting unit 2.

In the base station BS illustrated in Fig. 4, meanwhile, a radio signal received by an antenna 11A is processed by being converted to a baseband signal by an RF receiving unit 12 where the signal is classified on the basis of data type, and by being then inputted to a RACH receiving unit 13 or a Next Signal receiving unit 14.

The data type classification can be specified by assigning an ID for identifying data type, or by distinguishing data by time or frequency.

The Next Signal receiving unit 14 decodes information data by regular signal decoding processing. On the other hand, the RACH receiving unit 13 extracts a RACH signal comprised in a RACH sequence.

In the embodiment, the RACH signal is subjected to collision judgment in a collision judging unit 15.

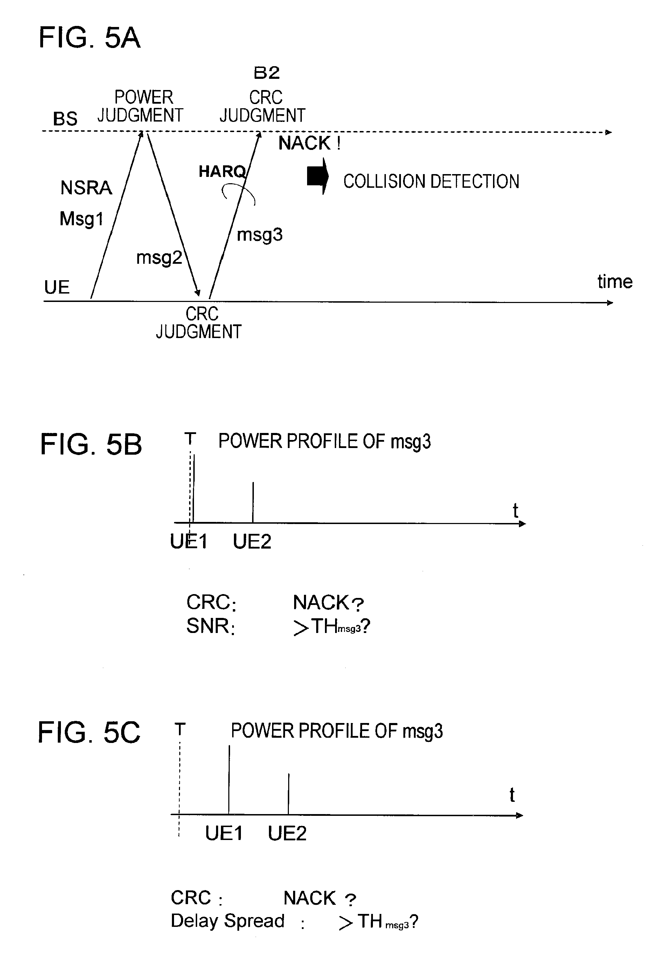

Fig. 5A and Fig. 5B are diagrams for explaining a first collision judgment method that is carried out in the collision judging unit 15. Fig. 5A represents the signal sequence between the user terminal UE and the base station BS, and Fig. 5B represents collision judgment conditions.

With reference to Fig. 5A, when the initial access signal msg1 is sent by the user terminal UE illustrated in Fig. 3, the RACH receiving unit 13 in the base station BS illustrated in Fig. 4 extracts a RACH signal provided in the RACH sequence, and sends the RACH signal to a RACH judging unit 17.

The RACH judging unit 17 monitors constantly all the 64 access slots and judges the random sequence with which the initial access signal msg1 is sent, to judge the received power thereof. If energy can be detected in such power judgment, it is judged that a communication request has been sent by some user terminal UE.

Upon detecting such power, the RACH judging unit 17 issues a request to a RACH Res generating unit 18, to the effect of generating a response message msg2. The RACH Res generating unit 18 allocates the temporary ID in the base station BS to the random sequence with which the initial access signal msg1 has been sent, to generate a message msg2.

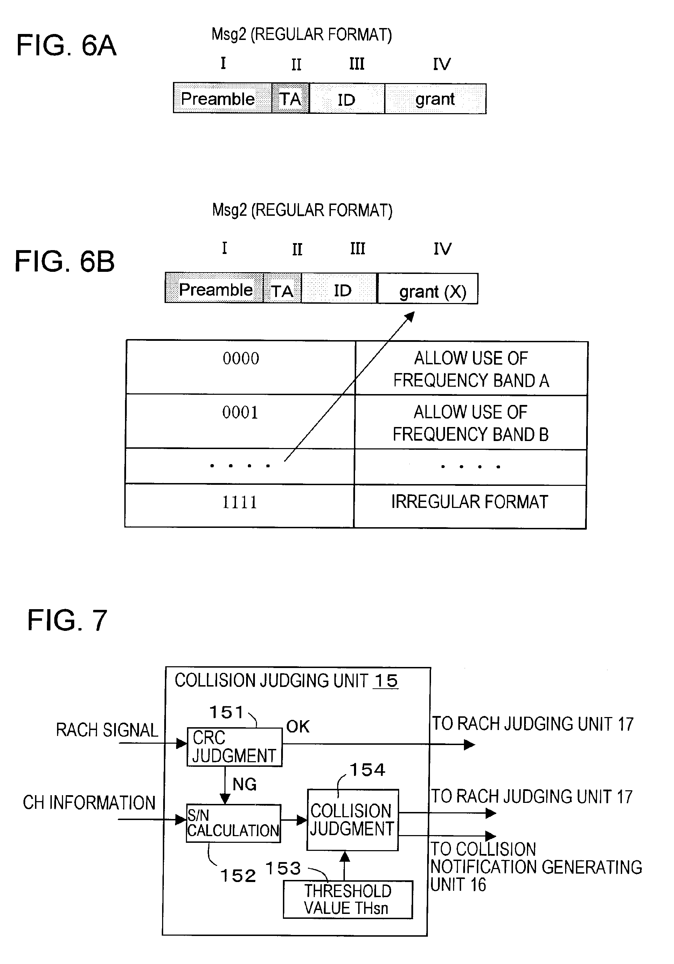

The message msg2 has a regular format, as illustrated in Fig. 6A. In the message, specifically, a preamble (I) is followed by a TA (Timing Advance) (II) for adjusting the timing of the uplink channel, an ID (II) corresponding to the user terminal and given in the base station BS, and a grant (IV) specifying the granted frequency band that may be used.

The message msg2 from the RACH Res generating unit 18 and having the above format passes through a selecting unit 19, is converted to radio frequency in an RF transmission unit 20, and is emitted from an antenna 11B.

The specification of the frequency band that may be used, as granted by the grant (IV), is advantageously set as follows. Specifically, a fixed slot (for instance, slot 57 to 64) among the series of 64 is dedicatedly secured for user terminal UE retransmission. By using a fixed slot, being a specific band thus secured, the probability of success in subsequent accesses can be increased even in cases of collision during initial access transmission access.

Returning to Fig. 3, the response message msg2 from the base station BS is received by a receiving antenna 4B in the user terminal UE, and is converted to a baseband signal by an RF receiving unit 5. The message msg2, which is a RACH response signal, is extracted at a RACH Res receiving unit 6, where CRC judgment is carried out.

If CRC judgment is correct, the extracted message msg2 is sent to a RACH Res checking unit 7, where the content of the message msg2 is checked.

Specifically, the RACH Res judging unit 9 checks the format of the message msg2, and if the format is an regular format, the above-described base station ID (III) and the user terminal UE ID are added to the message msg2, whereupon a response message msg3, with the granted usable frequency band, is generated by the Next RA/Next Signal generating unit 10.

The message msg3 generated by the Next RA/Next Signal generating unit 10, is sent to the RF transmission unit 3 via the selecting unit 2, and is emitted by the transmission antenna 4A, to be transmitted to the base station BS.

Returning to Fig. 4, the message msg3 received at the base station BS is subjected to collision judgment in the collision judging unit 15.

Fig. 7 is a configuration example of a collision judging unit 15 corresponding to the first collision judgment method. The RACH signal of the message msg3 is extracted at the RACH receiving unit 13 and is CRC-judged by a CRC judging unit 151. If CRC judgment is correct (OK), the RACH signal is sent as-is to the RACH judging unit 17, where it is processed in accordance with the format of the RACH signal.

If CRC judgment is incorrect (NG) a signal-to-noise ratio SNR is calculated by a SNR calculation circuit 152, using CH (Channel) information as a reference signal.

The value of the signal-to-noise ratio SNR calculated by the SNR calculation circuit 152 is compared, in a collision judgment circuit 154, with a threshold value THsn set beforehand in a memory 153.

When SNR ≤ THsn in the comparison, the collision judgment circuit 154 judges the signal energy to be insufficient, and notifies RACH signal retransmission to the RACH judging unit 17.

By contrast, when SNR>THsn, signal energy is sufficient, and hence the collision judgment circuit 154 decides that there is collision between users.

Specifically, the error in the CRC check of the message msg3 from a user terminal UE 1, synchronized with a predefined timing T, is judged to be caused by collision, even when power is greater than a predefined value THsn in the power profile of the message msg3 illustrated in Fig. 5B,

When the collision judgment circuit 154 judges collision on the basis of such judgment conditions, it issues an instruction to a collision notification generating unit 16, to the effect of generating a collision notification.

The magnitude of the threshold value THsn may be an optimal value obtained by computer simulation for each CP (Cyclic Prefix) that is used.

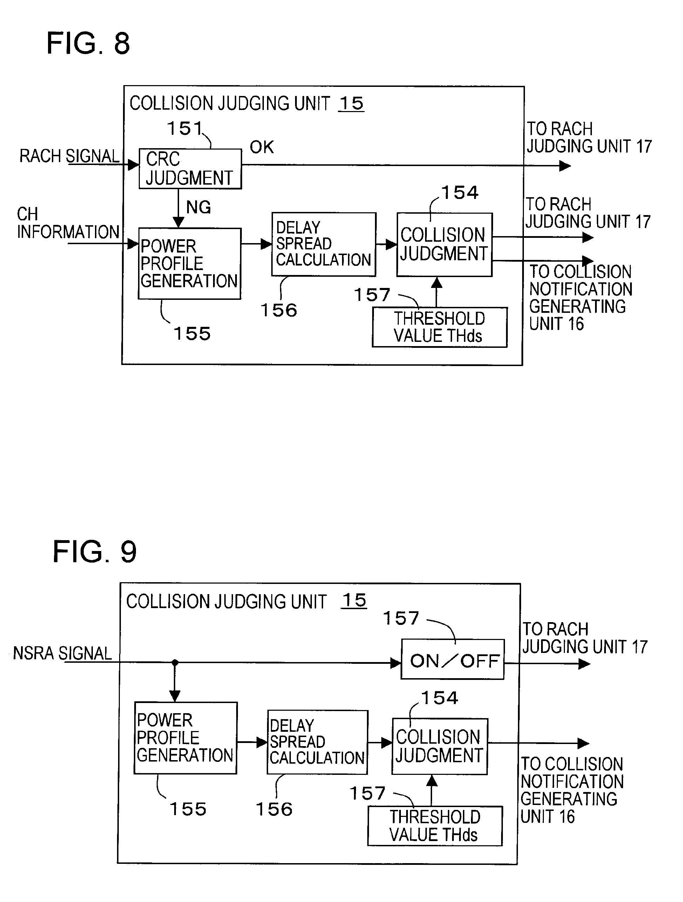

Fig. 8 is a configuration example of the collision judging unit 15 corresponding to a second collision judgment method. The CRC judging unit 151 carries out CRC judgment of the RACH signal of the message msg3. If CRC judgment is correct (OK), the RACH signal is sent as-is to the RACH judging unit 17, where it is processed in accordance with the format of the RACH signal.

If CRC judgment is incorrect (NG), a power profile generating circuit 155 generates a power profile using CH information.

Fig. 5C is an example of a power profile generated in accordance with the second collision judgment method. The peak positions of the received power from user terminals UE1, UE2, are delayed relative to a predefined reception timing T.

A delay spread calculating circuit 156 generates a power profile taking as a reference a channel estimated value that can be judged on the basis of a reference signal RS of the message (message msg3). The delay spread calculating circuit 156 judges that collision has occurred if the delay spread of the received power peaks of the user terminals UE1, UE2, on the basis of the reception timing T in the power profile, is wider than a reference threshold value (THds) set in a memory 157, and judges that propagation channel loss is substantial when the delay spread is narrower than the reference threshold value.

Specifically, the delay spread calculating circuit 156 calculates the amount of delay, i.e. the delay spread (DS) between the reception timing T and the received power peak. The collision judgment circuit 154 compares then the calculated delay spread (DS) with the threshold value THds, to judge collision occurrence.

In such comparative judgment, the collision judgment circuit 154 judges that multipath is a cause of error in CRC judgment if DS ≤ THds in the relationship between the calculated delay spread (DS) and the threshold value THds, whereupon the collision judgment circuit 154 notifies RACH signal retransmission to the RACH judging unit 17.

When on the other hand DS > THds, the collision judgment circuit 154 judges that the mixed responses from different user terminals UE are a cause of error in CRC judgment, and issues a notification to the collision notification generating unit 16.

The threshold value THds that is compared with the delay spread (DS) may be an optimal value determined by computer simulation for each CP (Cyclic Prefix) used, as is the case in the first collision judgment method above.

Fig. 9 is a configuration example of a collision judging unit 15 corresponding to a third collision judgment method.

In the light of the approach of the second collision judgment method illustrated in Fig. 8, the present configuration example uses a NSRA initial access signal msg1 (called a NSRA signal).

The power profile generating unit 155 converts the time-series NSRA signal into power, to generate a power profile. On the basis of the generated power profile, the delay spread calculating unit 156 generates a delay spread (DS). Next, a collision judging unit 154 compares the delay spread (DS) with the threshold value THds.

When DS ≤ THds, the collision judging unit 154 judges that multipath has occurred, turns on a NSRA signal switch circuit 157, and notifies the NSRA signal to the RACH judging unit 17. On the other hand, when DS > THds, the collision judging unit 154 judges that responses from different user terminals UE are mixed, issues a notification to the collision notification generating unit 16, and turns off the NSRA signal switch circuit 157, so that nothing is outputted to the RACH judging unit 17.

In the embodiment of Fig. 9, the threshold value THds that is compared with the delay spread (DS) may be an optimal value determined by computer simulation for each CP (Cyclic Prefix) used, as is the case in the first and second collision judgment methods above.

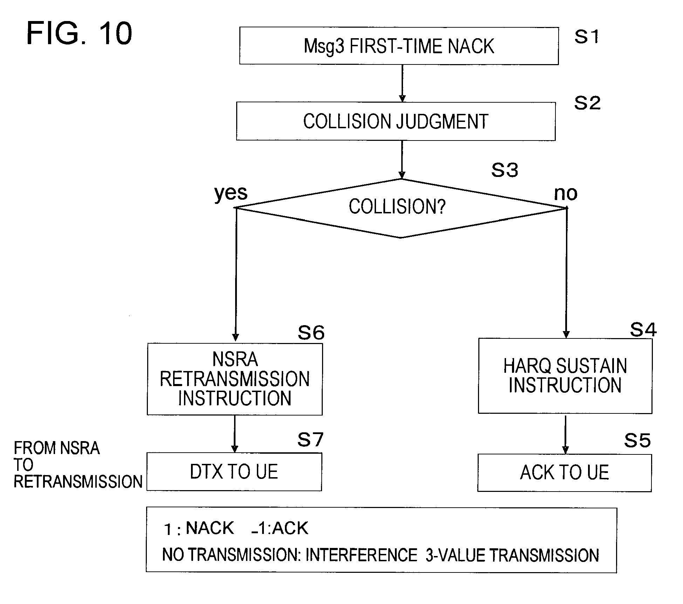

Fig. 10 is a process flow diagram for explaining a first method of collision notification to a user terminal UE, as a working example of a method for notifying collision to a user terminal UE.

In Fig. 10, when the CRC judging unit 151 in the collision judging unit 15 yields a NG judgment (step S1), collision judgment is carried out by the collision judgment circuit 154 (step S2).

When in collision judgment (step S2) propagation channel loss, and not collision, is judged to have occurred (step S3, no), a HARQ sustain instruction is issued (step S4), and an ACK signal is sent to the user terminal UE (step S5).

On the other hand, when in the collision judgment (step S2) collision between user terminals UE is judged to have occurred (step S3, yes), it becomes necessary to carry out retransmission of the message msg1 by NSRA (step S6).

In addition to a response method in which an ACK/NACK is notified to the user terminal UE, as a response scheme, there can be used also a method in which retransmission is instructed without transmitting anything (DTX: discontinuous transmission) (step S7).

A retransmission instruction based on such DTX (: discontinuous transmission) allows handling ACK/NACK without further increasing control bits, by using -1, +1 as an information bit.

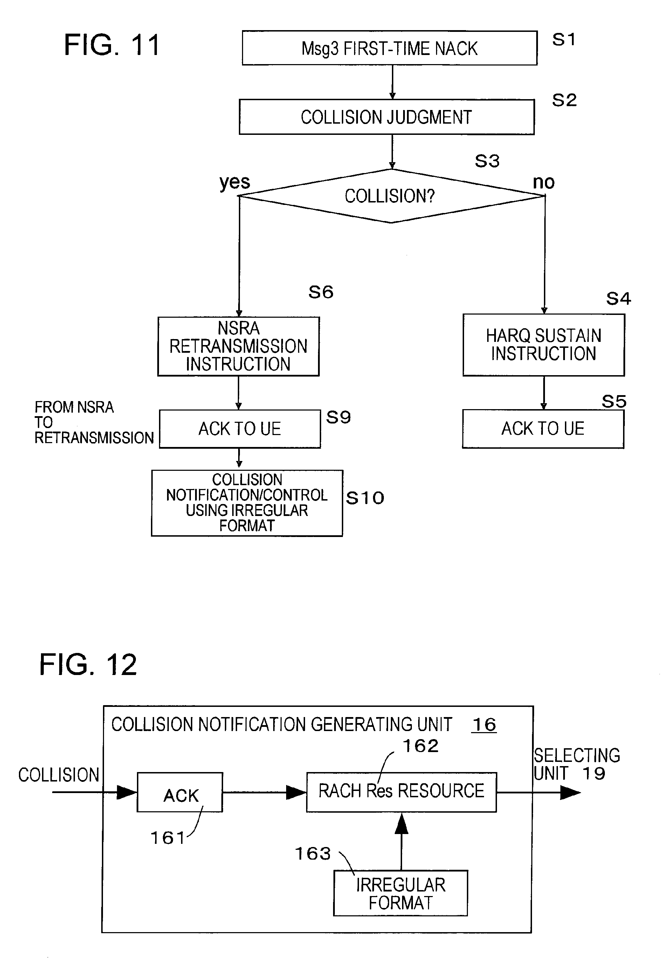

Fig. 11 is a process flow diagram for explaining a second notification method for notifying collision to a user terminal UE. Fig. 12 is a configuration example block diagram of the collision notification generating unit 16 of the base station BS, in the case of the second notification method.

In the second notification method, collision can be notified without increasing control bits, as in the first notification method above.

When the collision judging unit 15 judges that collision has occurred, the collision is reported to the collision notification generating unit 16. In the collision notification generating unit 16 illustrated in Fig. 12, collision notification is carried out by inserting ACK in the format, in an ACK insertion circuit 161 (step S9), and, in the next RACH sequence, by inserting an irregular format 163 at the position IV of "grant(x)", in a RACH Res resource(region)setting circuit 162, as illustrated in Fig. 6B (step S10). In the example illustrated in Fig. 6B, a pattern "1111" is inserted as the irregular format 163.

As a result, the base station BS can notify collision to the user terminal UE, without increasing bits.

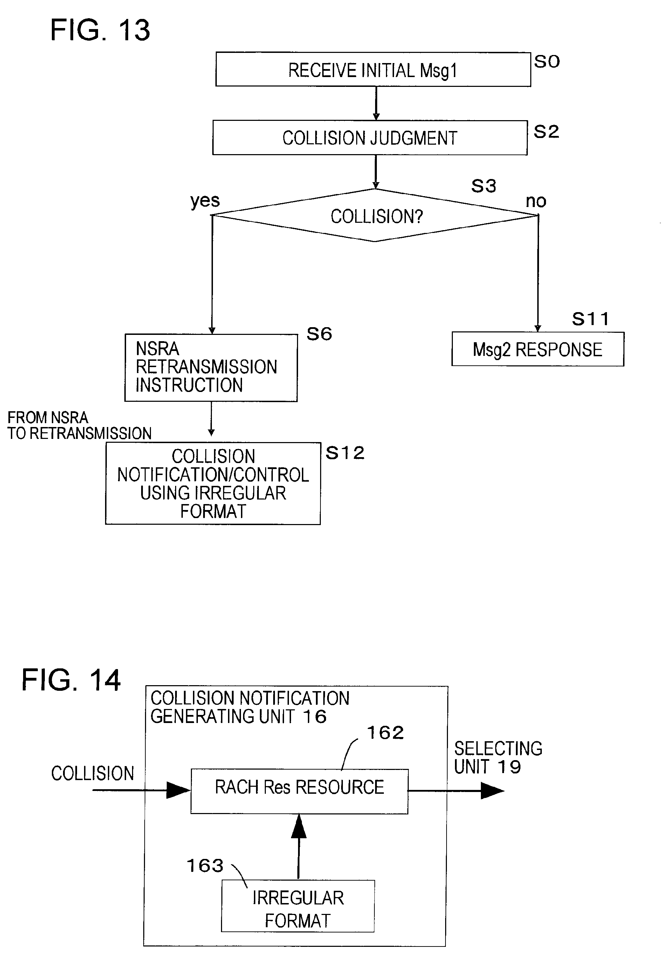

Fig. 13 is a process flow diagram for explaining a third notification method for notifying collision to a user terminal UE. Fig. 14 is a configuration example block diagram of the collision notification generating unit 16 of the base station BS, in the case of the third notification method.

The third notification method corresponds to an instance of collision judgment (step S2) during NSRA processing (step S0) explained above with reference to Fig. 5C. A response message msg2 is sent (step S11) when an initial message msg1 is received without collision (step S3, no).

In the present embodiment, an irregular format is inserted, without ACK/NACK notification, when collision is judged to have occurred (step S3, yes). Specifically, when collision is judged to have occurred, in order to instruct NSRA retransmission (step 6), collision notification is carried out by inserting the irregular format 163 at the position IV of "grant(x)", in the RACH Res resource(region) setting circuit 162, as illustrated in Fig. 6B (step S12).

An explanation follows next on an embodiment of retransmission processing, focusing on the RACH Res checking unit 7 in the user terminals UE, in response to the above collision notifications from the base station BS for RACH signals.

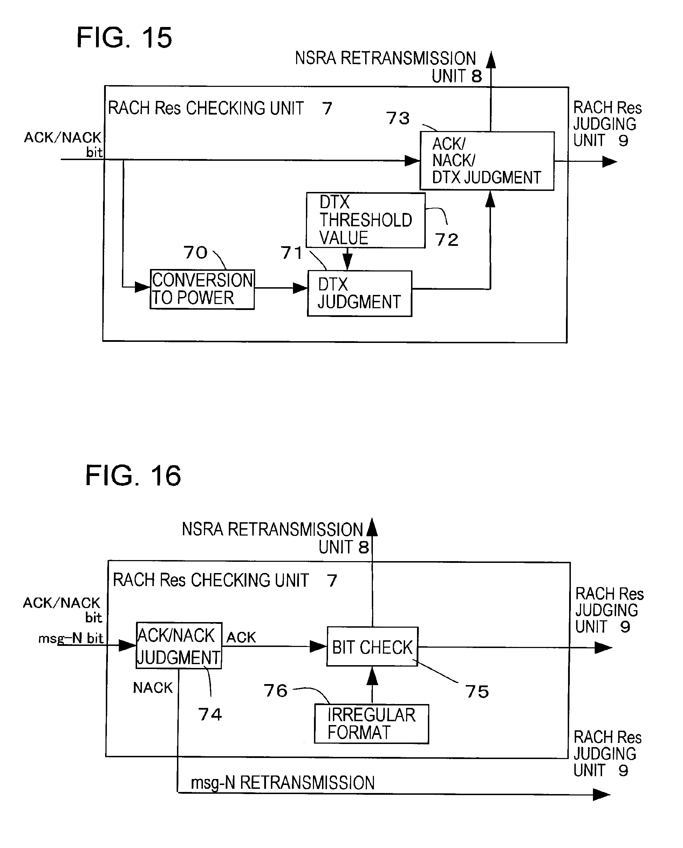

Fig. 15 is a block diagram of a first configuration example of such a RACH Res checking unit 7, as a configuration example corresponding to collision notification in accordance with the first notification method explained above.

In Fig. 15, an ACK/NACK bit extracted by the RACH Res receiving unit 6 is converted to power by a power conversion circuit 70, to judge, at a DTX judgment circuit 71, whether the ACK/NACK bit has sufficient energy, through comparison with a DTX threshold value 72. An optimal value obtained by computer simulation is used as the DTX threshold value 72.

The result of the DTX judgment is sent to an ACK/NACK/DTX judging unit 73. The ACK/NACK/DTX judging unit 73 judges whether the result is close to ±1 or is 0, on the basis of the comparison with the DTX threshold value 72 in the DTX judgment circuit 71. When the result is judged to be DTX, an NSRA retransmission unit 8 is notified, without ACK/NACK judgment.

If the judgment does not yield DTX, ACK/NACK judgment is carried out, and a RACH Res judging unit 9 is notified.

Fig. 16 illustrates next a configuration example of the RACH Res checking unit 7 corresponding to the second collision notification method illustrated in Fig. 11.

In Fig. 16, firstly ACK/NACK judgment is carried out, in an ACK/NACK judgment circuit 74, on information of messages msg-N (N=1, 2, 3...) and an ACK/NACK bit extracted by the RACH Res receiving unit 6. If the judgment yields NACK, retransmission of the message msg-N information is notified to the RACH Res judging unit 9.

If the judgment yields ACK, bit check is performed on the message msg-N bit to judge whether or not it has an irregular format.

When the irregular-format bit sequence "1111" denoting RACH collision (see Fig. 6B) coincides with a reference bit sequence, this indicates a collision notification from the base station BS, and hence the NSRA retransmission unit 8 is notified. When the sequences coincide, the RACH Res judging unit 9 is notified, and processing corresponding to the format of the message msg-N is carried out.

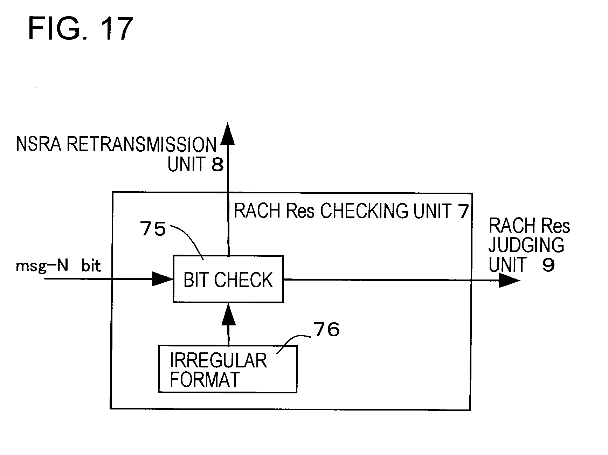

Fig. 17 illustrates a configuration example of the RACH Res checking unit 7 corresponding to the third collision notification method illustrated in Fig. 13. The configuration example in this case illustrates an instance where message msg-N information is transmitted without ACK/NACK notification, in contrast to the configuration example of the RACH Res checking unit 7 illustrated in Fig. 16. Except for not carrying out ACK/NACK judgment, therefore, the present configuration example is otherwise identical to the configuration example of the RACH Res checking unit 7 illustrated in Fig. 16.

As explained above, retry takes place after 30 to 40 ms in conventional access control methods, illustrated in Fig. 1. In the above embodiments, however, NSRA retry takes place after about 10 ms.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the scope of the invention.

## Claims

1. A radio communication system in which communication is carried out between a terminal and a base station through any of the predetermined number of random access slots, wherein
the base station subjects a received access signal to CRC error judgment and signal-to-noise ratio judgment, and
when the CRC error judgment yields a code error, and when the signal-to-noise ratio is greater than a prescribed reference value, the base station determines that there is collision of random access between a plurality of terminals.

2. A radio communication system in which communication is carried out between a terminal and a base station through any of the predetermined number of random access slots, wherein
the base station subjects a received access signal to CRC error judgment and generation of a power profile of the received access signal, and
when the CRC error judgment yields a code error, and when a delay spread of the power profile is wider than a prescribed reference value, the base station judges that there is collision of random access between a plurality of terminals.

3. The radio communication system according to claim 1, wherein
the base station notifies a judgment result that there is collision of random access between the plurality of terminals to the terminal, by setting, in a predetermined format with which a usable frequency band is notified to the terminal from the base station, an irregular format that differs from a pattern with which the usable frequency band is notified.

4. The radio communication system according to claim 1, wherein
the base station sets a non-transmitting state in addition to an ACK or NACK response to respond to random access from the terminal, and
the base station notifies a judgment result that there is collision of random access between the plurality of terminals, to the terminal, by setting the non-transmitting state.

5. The radio communication system according to claim 3, wherein
the terminal, upon receiving a response signal from the base station, judges whether the response signal is ACK or NACK, and when the judgment yields ACK, the terminal performs bit checking between the response signal and the irregular format, and in case where the checking yields a match, the terminal judges that collision is notified, and retransmits an initial access signal to the base station.

6. The radio communication system according to claim 4, wherein
the terminal, upon receiving a response signal from the base station, carries out power judgment, and when the power has a prescribed value, the terminal judges that collision is notified, and retransmits an initial access signal to the base station.

7. A base station in a radio communication system in which communication is carried out between a terminal and a base station through any of the predetermined number of random access slots, the base station comprising:
an error judgment circuit to subject a received access signal to CRC error judgment;
a circuit to determine a signal-to-noise ratio of the received signal when the CRC error judgment in the error judgment circuit yields a code error; and
a collision judgment circuit to judge that there is collision of random access between a plurality of terminals when the signal-to-noise ratio determined by the circuit to determine the signal-to-noise ratio of the received signal is greater than a prescribed reference value.

8. A base station in a radio communication system in which communication is carried out between a terminal and a base station through any of the predetermined number of random access slots, the base station comprising:
an error judgment circuit to subject a received access signal to CRC error judgment;
a circuit to generate a power profile of the received signal when the CRC error judgment in the error judgment circuit yields a code error; and
a collision judgment circuit to judge that there is collision of random access between a plurality of terminals when delay spread in the power profile generated by the circuit to generate a power profile is wider than a reference value.

9. The base station according to claim 7, further comprising:
a collision notification generating unit to set, in a predetermined format with which a usable frequency band is notified to the terminal, an irregular format that differs from a pattern with which the usable frequency band is notified, in order to notify to the terminal a judgment result to the effect that there is collision of random access between the plurality of terminals, when the collision judgment circuit judges that collision has occurred.

10. The base station according to claim 7, further comprising:
a collision notification generating unit, in addition to an ACK or NACK response to random access from the terminal, to set a non-transmitting state in order to notify to the terminal a judgment result that there is collision of random access between the plurality of terminals, when the collision judgment circuit judges that collision has occurred.
